(19) Europäisches Patentamt / European Patent Office / Office européen des brevets

(11) EP 2 151 787 A2

(12) EUROPEAN PATENT APPLICATION

(43) Date of publication:
10.02.2010 Bulletin 2010/06

(51) Int Cl.:
G06K 9/00 (2006.01)

(21) Application number: 09167200.6

(22) Date of filing: 04.08.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 07.08.2008 US 187991

(71) Applicant: Honeywell International Inc.
Morristown, NJ 07962 (US)

(72) Inventors:
• Miezianko, Roland
Plymouth, MN 55447 (US)
• Cohen, Issac
Minnetonka, MN 55345 (US)

(74) Representative: Buckley, Guy Julian
Patent Outsourcing Limited
1 King Street
Bakewell
Derbyshire DE45 1DZ (GB)

(54) **System for automatic social network construction from image data**

(57) A system (10) for constructing (62) a social network structure from image data. A number of image sensors or cameras (31, 41) may be placed in various areas of a large facility having much throughput of many people, such as an airport. Images from the cameras (31, 41) may indicate an event (65). The event may be activity recognized by video analytics (32) of the system. Video analytics may detect, track and associate people, faces and objects in the images. The analytics (32) may provide activity recognition from images. A dynamic social network may be constructed (62) from information provided by the video analytics (32). Analysis of a constructed social network may reveal further information which can be available for improving dynamic social network construction (62).

Figure 1

EP 2 151 787 A2

## Description

Background

The present invention pertains to security and particularly to maintaining security in large and important facilities. More particularly, the invention pertains to video-based security.

Summary

The invention is a system for image-based synthesis of open dynamic social network. The system may automatically map and construct social networks from image data. It may also provide discovery of other networks and analysis of them. The system may recognize networks that span over long periods of time and great distances.

Brief Description of the Drawing

Figure 1 is a diagram showing an interaction among various aspects of dynamic social network analysis;
Figure 2 is a diagram of principal elements and interactions of video analytics;
Figure 3 is a flow diagram of basic blocks of video-based inference of social network system;
Figure 4 is a diagram of an approach of the present system as applied in a scenario of observations;
Figure 5 is a flow diagram showing existing and significant video analytics;
Figure 6 is a diagram of a layout for a complexity analysis involving a person;
Figure 7 shows a layout for the complexity analysis involving a person and an object;
Figure 8 is a diagram of a network which may be used in conjunction with a complexity analysis having various nodes that illustrate a dynamic social network relating to trigger events;
Figure 9 is a diagram of an example of a layered architecture of a system for constructing a social network;
Figure 10 is a diagram of an example screen showing an image and having components for obtaining, selecting and labeling portions of the image in the context of a low layer of the present system;
Figure 11 shows a matrix listing actors and their attendance or non-attendance at events in the context of a middle layer of the present system;
Figure 12 shows a diagram of illustrative interactions or meetings among a number of actors;
Figure 13 shows a matrix incorporating information from the diagram in Figure 12; and
Figure 14 shows a matrix listing actors and events, and identifying the relationships for constructing a social structure.

## Description

The present invention is a system for building a dynamic social network from image data. The ever present use of video sensors for monitoring appears to have transformed the security operations in large facilities such as airports and critically susceptible infrastructures. Commercial solutions that allow the monitoring of simple activities seem to be currently deployed in large numbers of facilities, and operators have come to rely on these tools for their daily security operations. While these solutions provide basic features, they appear unable to detect activities of interest related to security threats. Dangerous perpetrators tend to be aware of the presence of the cameras and that they are being watched, and consequently they act accordingly not to raise suspicion. To stop or hinder these people, security operators should be trained to spot unusual patterns of activities or suspicious behaviors.

The present system includes an approach for constructing or synthesizing a dynamic social network from image data. Aspects of such approach may be described in U.S. Patent Application No. 12/124,293, filed May 21, 2008. U.S. Patent Application No. 12/124,293, filed May 21, 2008, is hereby incorporated by reference.

The present invention is a system which may incorporate a paradigm for discovering motivation and intent of individuals and groups in secured public environments such as airports. The system may incorporate as much of associating as well as detection. It may synthesize social networks from image data (including data accumulated over a period of time). Synthesizing may include various techniques of video analytics. "Video data" may be one kind of image data. The system may determine a dynamic social network via processing. Specific tools may be used to analyze aspects of the social network and the data. A focus of the present system may be to develop open dynamic social network (DSN) analysis driven by video analytic primitives and standoff biometric capabilities when available. Analyses of dynamic social networks already synthesized may enable a security operator to discover patterns of activities, behaviors, and relationships between people that are not currently being detected automatically via processing. Even though in the present system, a social network may be constructed from image data; sound, such as detected conversations among the people in the images, may be added to the system to aid in social network construction.

The system may include mapping and construction of social networks from video data, recognition of activities that span long periods of time, pattern discovery and analysis of discovered social networks

The system may aid operators and analysts in understanding and relating to activities that occur in disparate scenes and at different time scales. Also, the present system may much better handle the ever increasing amount of sensors and data (e.g., thousands of cameras in airports, petabytes of intelligence data, hundreds of hours of, e.g., UAVs, and so on) than other systems.

Modeling relationships with the system may serve primarily goals which include visualizing relationships between actors, events, objects and locales for uncovering underlying structures difficult to grasp from disparate data, studying factors that influence the relationships such as providing context to the analysis, and inferring implications from the relational data such as predictive capabilities, anomaly detection (e.g., change in the data flow), and so forth.

Video analytics may provide detection and tracking capabilities. There may be rule-based recognition of activities of interest which is highly dependent on the detection and tracking, and face association using high resolution imagery. Video surveillance may focus on providing accurate object detection and tracking (e.g., faces, people, vehicles, and other items) for analytics and indexing purposes, anomaly detection, and event ontology and recognition of activities of interest.

A paradigm of the present system may include discovering relationships among large groups of monitored people, and the motivation and intent of individuals and groups. It may further include inferring a contextual knowledge of the observed activity, and aggregating a large number of observations for augmenting situation awareness by operators and analysts. Typical social network analytic tools appear not to address deriving such information from video data. However, the present system may leverage existing tools and platforms for advancing its syntheses. Scenarios and applications well suited for this paradigm may involve public environments such as mass transportation sites which include airports, seaports, train stations, and so forth. Items of interest relative to the present system may include terrorist groups, organized crime, intelligence communities of hostile countries, and the like. The system may note a dangerous individual acting on his or her own, but working with, for example, suppliers or other support organizations to accomplish certain objectives without the suppliers or organizations being aware of such objectives.

Video-based inference of social networks may provide system operators and analysts time-sensitive information about people and their entourages. The system may assist analysts to understand complex patterns of activities and relationships of them. There may be a detection of changes in the entourages of key people, such as local representatives, military leaders, and so on, which may be "flags" indicating the dynamics of the social networks among them.

The system may provide automatic construction and identification of social networks from video analytics processed data. Contextual information and mission specific *a priori* knowledge may be integrated. This information may be complemented or supplemented with various sorts of intelligence.

There may be a situational understanding beyond the basic video analytics, which may be aided with an expansion of forensic analysis. Also, pattern finding and analysis of discovered social networks may aid in situational understanding. Persistent surveillance may be enabled with accurate contextual knowledge of the monitored activity. The situational understanding may include discovering motivation and intent of individuals and groups. Predictive capabilities for proactive/pre-emptive actions may be developed from the discovered information. A data framework may be provided for integration of a time-sensitive bottom-up information flow.

The system may incorporate social network analyses. Social networks may help in modeling patterns and/or relationships among interacting units. Modeling these relationships may serve primarily the following aspects. One aspect may be visualizing relationships between actors, events, objects and locales for uncovering underlying structures difficult to grasp from disparate data. Another aspect may be studying the factors that influence the relationships and provide context to the syntheses. Also, an aspect may include inferring implications from the relational data such as predictive capabilities and anomaly detection (e.g., change in the data flow).

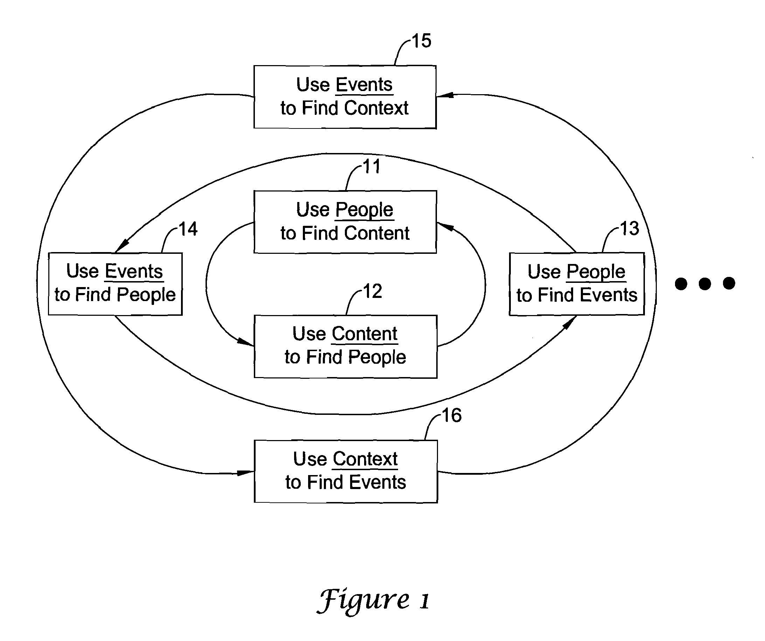

Figure 1 is a diagram showing an interaction among various aspects of dynamic social network analysis. "People" may be used to find "content" in block 11 and the content may be used to find people in block 12. People may be used to find "events" in block 13 and events may be used to find people in block 14. Events may be used to find "context" in block 15 and context may be used to find events in block 16. This analysis may have various permutations for interaction and inference.

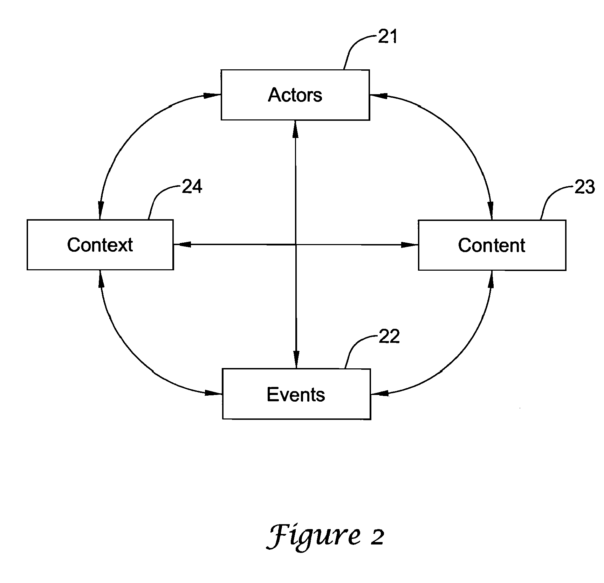

Real-time video analytics may be combined with social network analysis. Predictive capabilities may be developed by combining social network analysis and video analytics. Principal elements and interactions may be noted in video analytics in Figure 2. People/objects (i.e., actors) 21 may interact with events 22, content 23 and context 24, and vice versa. Content 23 may interact with context 24, along with actors 21 and events 22, and vice versa. Context 24 may interact with events 22 and vice versa.

A video-based inference of social network (VISNET) may be implemented in observations of people. For instance, agents may pre-screen people with SPOT (screening passengers by observation techniques) to detect specific behaviors. SPOT may persistently be used on persons of interest. The application of SPOT may be effected at numerous airports and other sites. VISNET may assist operators and analysts in understanding complex patterns of activities and relationships among the observed people. VISNET may incorporate a large number of sensors for observing actors such as people that are interrelated. Changes may be detected in an entourage of key people associated with groups, associations and so forth. There may be automatic construction and identification of small social networks from video analytics data. Some of the construction and identification may result from an integration of contextual information and mission specific information from *a prior* knowledge. Completion and update of annotations of a manual on social networks developed from such construction and identification may be provided by intelligence organizations.

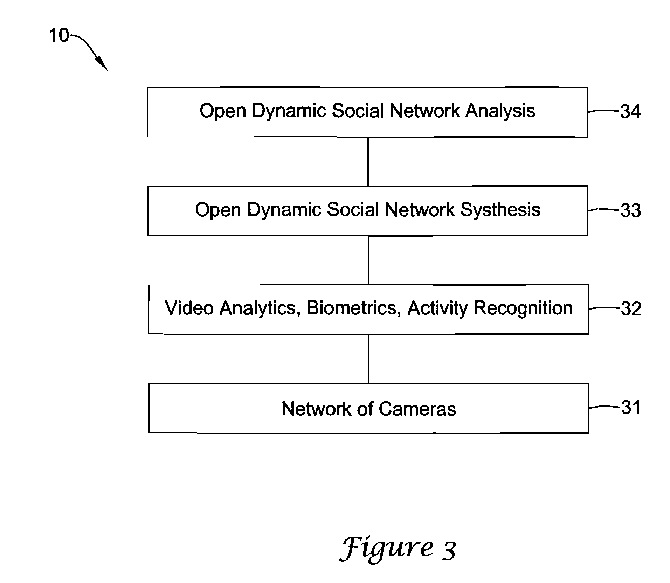

Figure 3 is a flow diagram of basic blocks of VISNET system 10. A network 31 of cameras may be used to collect primary image data such as video pictures of actors and events at various locations of a facility, for instance, an airport. Images from the cameras may go to mechanisms of block or stage 32 for attaining biometrics, video analytics, activity recognition, and the like from the images. This information may go from block or stage 32 to a block or stage 33 for open dynamic social network synthesis of the information. The synthesis may be automatic. The results of the synthesis at block or stage 33 may go to a block or stage 34 for open dynamic social network analysis. At stage 33, an inference of a dynamic social network may occur, along with an analysis at stage 34 for possible conclusions or findings being sought. There may be feedback from block 34 to block 33 for improving dynamic social network synthesis.

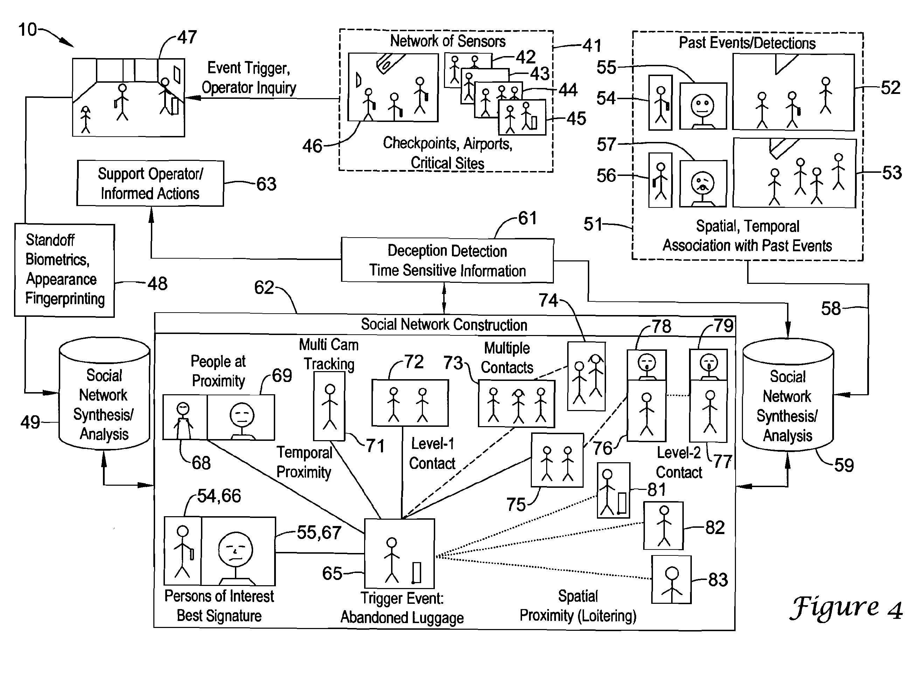

Figure 4 reveals an approach of the present system 10 as applied in a scenario of observations. A network 41 of sensors may be placed at checkpoints, airports, critical sites, and the like for obtaining image data. Shown may be screen views 42, 43, 44 and 45 from four different sensors about a facility. One of the screens may be clicked on to obtain a full view at screen 46 of the respective screen such as screen view 44. An event may trigger an operator query to show a screen 47 where a person appears to be abandoning his luggage, which may be a selected screen view 42 from network of sensors 41. Image data from screen 47 may be processed with standoff biometrics, appearance fingerprinting, and other information identifying techniques at block 48. Such item may result in a processed image that, with information, goes on to a social network synthesis/analysis mechanism module 49. The person the object (i.e., luggage) may be regarded as an actor.

A module 51 containing past events and detection in the form of images is shown, whereas module 49 deals with the recent and on-the-fly items. Module 51 may deal with spatial, temporal association with past events. Two screens 52 and 53 may include images of persons of interest at two or more different times (i.e., several months or so). A person of interest is noted in both images with a body rectangle image 54 and a face rectangle image 55 around the full figure and face, respectively, in screen 52, and with a body rectangle 56 and face rectangle 57, respectively, in screen 53. The noted information from module 51 may be associated to indicate that the persons in both screens are the same person at the different times. That information 58 may go on to a social network synthesis/analysis mechanism 59.

The social network synthesis/analysis mechanism 49 and the social network synthesis/analysis mechanism 59 may each have a two-way connection with a social network construction module 62. Module 62 shows an example social network synthesized or built from an event. Also, a deception detection and time sensitive information inference module 61 may have a two-way connection with the social network construction module 62. Module 61 may output deception detection and time sensitive information to a support operator and informed actions module 63 and to the social network synthesis/analysis mechanism 59.

The social network construction module 62 reveals various aspects of the social structure that may evolve as a result from the trigger event of abandoned luggage as indicated by screen 65. The abandoned luggage may be connected with the security checkpoint occurrence of which screen 66 shows a body rectangle of the person concerned along with a screen 67 which shows a face rectangle of the person. The screen or screens may provide a person of interest "best signature". There appears to be a match with the person by the luggage in screen 65. There are body and face rectangles in screens 68 and 69, respectively, of people in temporal proximity of the person of interest. Temporal proximity may involve multi-camera tracking in screen 71 of the person of interest or one appearing to be associated with the person of interest. Screen 72 is an example of a level-1 contact of the person of interest with another person. The level-1 contact may also involve multiple contacts as indicated by screens 73 and 74 showing spatial proximity of the other contacts, i.e., persons.

There may be level-2 contacts as shown in body rectangle screens 76 and 77. Also, shown are corresponding face rectangle screens 78 and 79, respectively, of screens 76 and 77, that stem from a level-1 contact shown in screen 75. Screens 81, 82 and 83 are examples of spatial proximity to the trigger event of image 65. Screen 81 shows a person looking at the abandoned luggage. Screen 82 shows a person going by the luggage. Still another person appears suspiciously near the luggage. Some instances of spatial proximity may include loitering. Each of the screens in block 62 may be synthesized and analyzed, and vice versa with reiteration for improving the synthesis, to construct whatever social network that happens to exist.

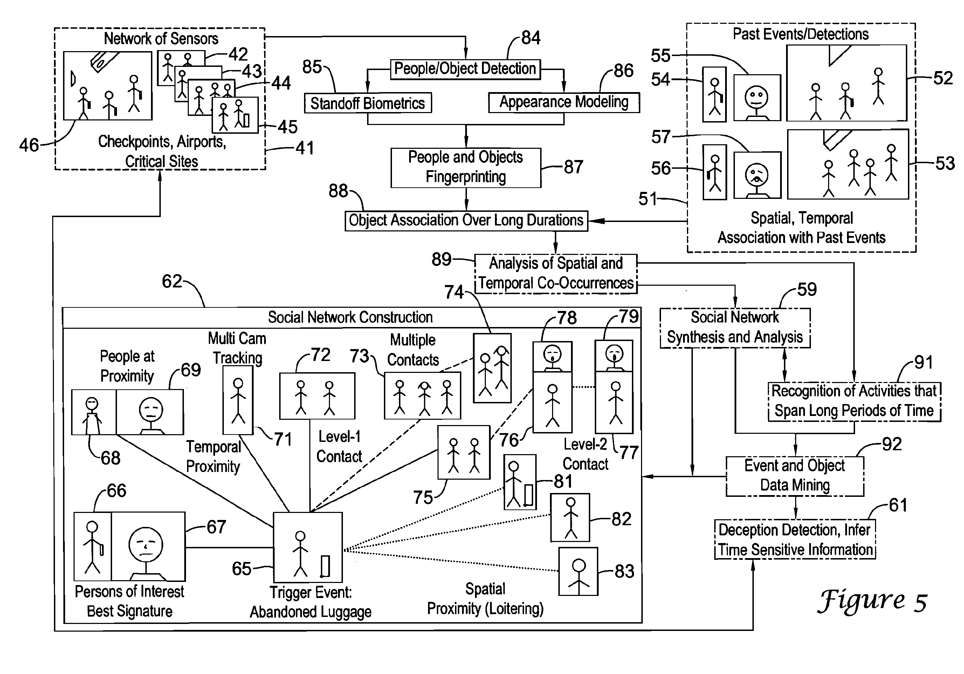

Figure 5 is a flow diagram showing existing and significant video analytics. The double dot dashed lines indicate modules of the video analytics particularly significant to the present system. The network 41 of sensors (Figure 4) may output images to a people/object detection module 84. Outputs from detection module may go to a standoff biometrics module 85 and an appearance modeling module 86. Biometric and modeling outputs from modules 85 and 86, respectively, may go to a people and objects fingerprinting module 87. From module 87, an output may go to a module 88 for object association of long durations. Another input to module 88 may come from module 51 (Figure 4) with information involving past events and detections along with spatial and/or temporal association with past events and detections. An output from module 88 may be entered into a module 89 for analysis of spatial and temporal co-occurrences. Outputs from module 89 may be entered in module 59 for social network synthesis and analysis (Figure 4) and module 91 for recognition of activities that span long periods of time. Module 59 has an output that may go to module 62 (Figure 4) for social network construction. Modules 59 and 91 may have a two-way connection between them. Outputs from modules 59 and 91 may go to a module 92 for event and object mining. An output from module 92 may go to module 61 for deception detection and inference of sensitive information (Figure 4) and to module 62. Also, modules 61 and 41 may have a two-way connection between them. Modules 89, 59, 91, 92 and 61 may be regarded as significant analytics components of the present system. The arrangement and interconnection of the other components among themselves and the significant analytics components may be regarded as major ones relative to the present system.

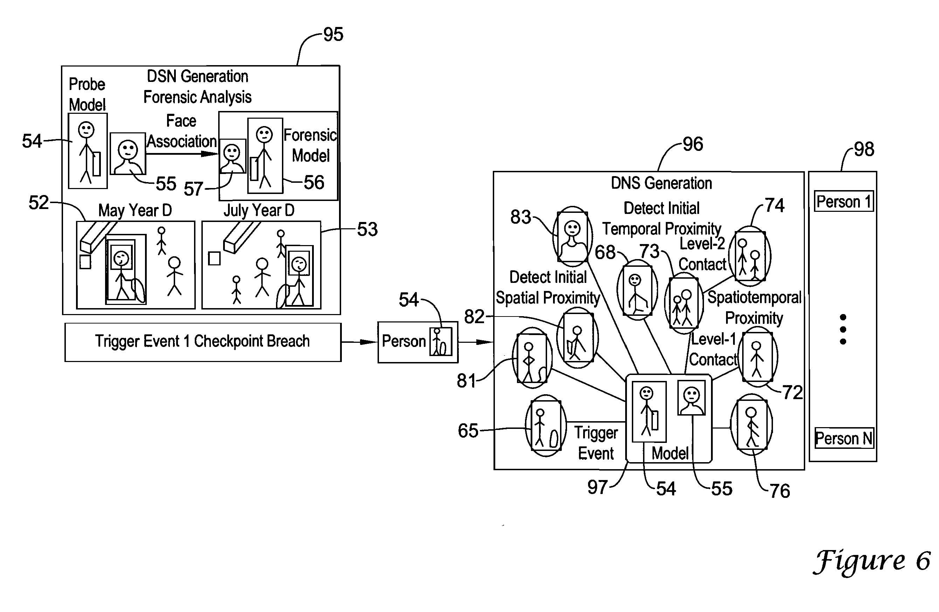

Figure 6 shows a layout for a complexity analysis involving a person. It involves a trigger event 1 (checkpoint breach) for which the complexity is O(N). Screen 95 shows image 52 of a May Year D scene and image 53 of a July Year D scene. A probe model image 54 with a body rectangle and an image 55 with a face rectangle encompassing a person of interest may be extracted from image 52. A forensic model image 56 with a body rectangle and an image 57 with a face rectangle encompassing a person of interest may be extracted from image 53. Face association of image 55 may be made with image 57. The person of the May Year D image 52 may be involved with the checkpoint breach. The forensic analysis of subsequent images appears to have found a person in the later image 53 to be like the person of image 52 through face association. This analysis may be used to establish this or other links.

The image 54 of the person in the trigger event 1 may lead to a dynamic social network generation as shown in block 96. Model 97 encompasses the probe model image 54 with the body rectangle and image 55 with the face rectangle showing the person of interest. Model 97 has a connection with various persons of one or another kind of connection to generate the dynamic social network. Persons, and perhaps their relationships within the model 97, may be listed in block 98. Model 97 indicates a connection with another trigger event shown in image 65 of a person next to the abandoned suitcase. There appears to be a detection of initial spatial proximity of model 97 with persons in images 81, 82 and 83. There also appears to be a detection of initial temporal proximity of model 97 with a person in image 68. Persons of image 73 may be regarded as a level-1 contact and persons of image 74 may be regarded as a level-2 contact of model 97. There may be other level contacts. Images 72 and 76 may be of persons having spatial-temporal proximity to model 97.

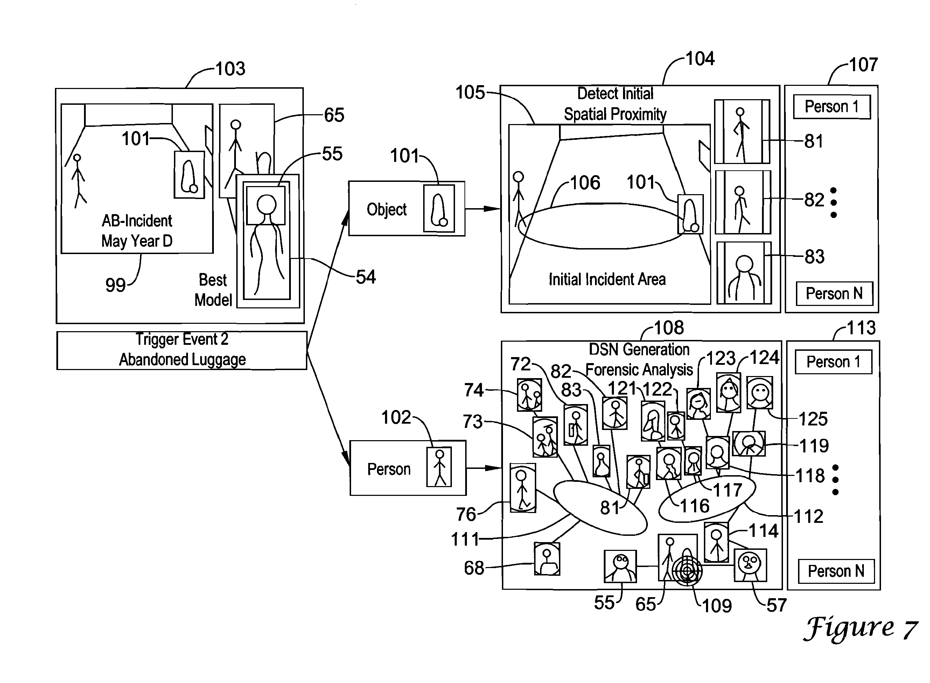

Figure 7 shows a layout for the complexity analysis involving a person and an object. It may involve a trigger event 2 (abandoned luggage) for which the complexity is indicated as O(M)+O(N). A complexity upper bound may be less than or equal to $N_{(Trigger-Event)} \times [O(M)+O(N)]$. A block 103 may relate to the trigger event 2 of the abandoned luggage shown in object rectangle 101 of image 99 which is of the abandoned luggage (AB) incident in May Year D. Rectangle 101 of image 99 may also be referred to as an image 101. Rectangles may be regarded as images with common reference numbers. Image 65 reveals a person standing next to the luggage and who apparently abandoned the luggage. Body rectangle or image 54 with the face rectangle 55 shows the best model of the person suspected of abandoning the luggage. Event 2 may lead as an object in image 101 to a block 104. An initial spatial proximity to the luggage may be detected in image 105. An initial incident area 106 may marked out with a circle relative to the object rectangle 101 of the luggage. Persons detected within the incident area may be captured in images 81, 82 and 83 as shown to the right of image 105 in block 104. The detected persons may be listed in block 107 next to block 104. These persons may be regarded as being associated with the luggage.

Event 2 may also lead as a person in image 102 to a block 108. Image 102 may be a body portion or rectangle from image 65 of the person standing by the luggage. Block 108 shows a generation of a dynamic social network resulting from forensic analysis and other tools. Image 65 reveals the luggage as being the trigger event with a target 109 situated on it. Face images 55 and 57 may be associated with the person next to the luggage recorded as participating in the abandonment of the luggage. The person of image 55 may be associated with the May Year D checkpoint breach and abandoned luggage. The person of image 57 may have been spotted in July Year D and through face association may be identified as the same person of image 57. Observation of the person in image 55 may reveal a dynamic social network of other persons shown diagrammatically with an oval 111. Subsequent observation of the person in image 57 may reveal another dynamic social network of other persons shown diagrammatically with an oval 112. The persons connected to ovals 111 and 112 may be listed in a block 113 to the right of block 108. Analysis and correlation of various persons and aspects of their interaction in the networks of ovals 111 and 112 may be made.

Oval 111 may link the person of image 55 with persons in images 68, 72, 73, 74, 76, 81, 82 and 83, which are discussed herein. Oval 112 may link the person of image 57 through a person in image 114. With this intermediary, the person of image 57 may be linked to persons in images 116, 117, 118 and 119. Further linkage to persons 121, 122, 123 and 124, and 125 may be made via the persons in images 116, 117, 118 and 119, respectively.

A complexity analysis of dynamic social network generation in Figures 6 and 7 may be made. A person of image 54 in Figure 6 with the detected trigger event (TE) dynamic social network generation may have an upper bound complexity of O(N), where N is a number of direct associations. An object and person of images 101 and 102, respectively, with the detected trigger event dynamic social network generation may have an upper bound complexity of $N_{TE}x[O(M)+O(N)]$, where N is a number of direct associations with the person and M is a number of direct spatial associations with the object. Thus, there may be a reducing the complexity of video analytics data representation from individual blobs to tracks of related and associated data.

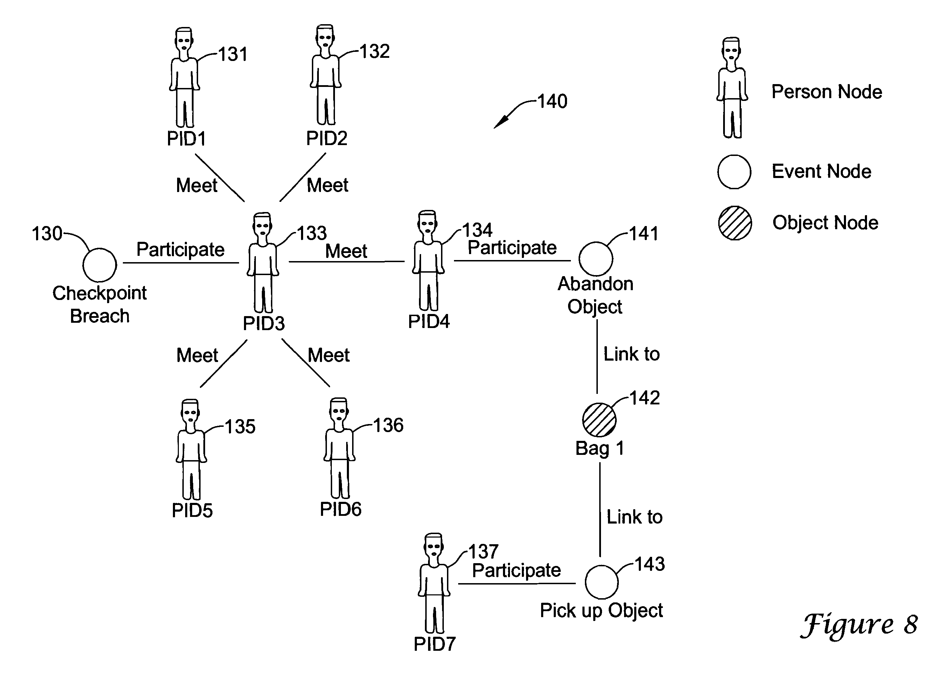

Figure 8 is a diagram of a network 140 which may be used in conjunction with a complexity analysis having various nodes that illustrate a dynamic social network relating to the trigger events 1 and 2 as discussed herein. A person node may be indicated by an icon of a person, an event node may be indicated by a white circle, and an object node may be indicated by a shaded circle. The person nodes may be designated with personal identification numbers (PID nos.), such as PID1-PID7. The person nodes of the PID nos. may be referred to as persons 131-137, respectively.

A checkpoint breach 130 may be the trigger event 1 which indicates the activity leading to a dynamic social network generation which may be subject to a complexity analysis. A person 133 may participate in the breach 130. After the breach, person 133 may meet persons 131, 132, 134, 135 and 136. Some of these persons may or may not have had any previous relationship with person 133. One or more of these persons may begin a relationship with person 133 or vice versa. One or more, or none of the persons 131, 132, 134, 135 and 136 may be the same person as person 133 who appeared to be participating in breach 130.

Person 134 may participate by abandoning an object which is indicated by a node 141 and regarded as an abandoned object event node 141. The event node 141 may be linked to an object node 142 which is indicated to be a "bag 1", such as luggage. Object node 142 may be linked to an event node 143 which is regarded as a "pick up object" node. A person 137 may participate by being the one who picked up the object, bag 1 or luggage.

The complexity of the network 140 may be equal to or less than O(Mp+Mp*Me+Mp*Me*Mo) where Mp is a coefficient of a number of persons, Me a number of events and Mo a number of objects. Since there are seven persons, three events and one object in network 140, then Mp = 7, Me = 3 and Mo = 1. The complexity may be tabulated as O(7+7*3+7*3*1), or O(49).

The present system may have an automatic social network synthesis which may include a fusion of biometric identifications (IDs), video analytics, contextual information, data mining, and other items. The synthesis may include a predictive capability plus expanding the SPOT observational phase. Analytics methodologies, having tools for building dynamic social networks from non-co-located video observations, may be incorporated in the system. The methodologies may include uncertainty modeling, belief propagation and robust association of observations of people, objects, and so forth. Social network analysis may use incomplete observations, including dominant figure detection, importance cardinality, and group membership. Analyses may include a creation of strong and weak associations over short and long observations with temporal resolution. The present system may change detection, identify new people, note interactions and exchanges of people, and so on. Metrics may be used for quantification of performance and accuracy of the analyses and their results.

The present system may further include inferring and mapping of social networks from video data, video analytics, biometrics (e.g., iris standoff recognition and face association) from low resolution imagery, standoff irises, appearance modeling and activity recognition. The system may provide robust association across sensors and over long observations, and context-driven mapping and analysis. Some of the system components for improving expediency may include low resolution video, fast data indexing for forensic analyses and model social networks as an open dynamic arrangement. The system may be complemented with HSARPA programs (association of objects across non-overlapping cameras). There may be pre-emptive capabilities from the integration of social network knowledge with video analytics and vice versa.

Video analytics of the system may aid in people detection in crowded environments, processing information from a large network of cameras, activity recognition, association of objects across a network of uncalibrated sensors, and appearance modeling across uncalibrated non-overlapping cameras.

Association of objects by the system may aid in people association which includes robust appearance models and iris recognition at a distance. There may be face detection and association which includes feature-based descriptors for people and fingerprinting. There may be object detection and association which use uncalibrated sensors and object fingerprinting.

The system may map dynamic social networks (DSN). The open dynamic social network model may include an unknown *a priori* population of interest, and integrate objects, locales and events. It may augment current DSN models with observations inferred from video analytics, create open DSN from short term observations, and associate/aggregate social sub-networks from long-term observations.

There may be social network syntheses which may include derivation of social networks from incomplete observations based on incomplete video analytics, multi-valued edges and belief propagation in multi-modal graphs. There may be noted spatial and temporal frequencies of association among individuals, objects and locales. The syntheses may also include matching networks for predictive reasoning.

The DNS of the system may implement recognition of activities that span long periods of time and geographic areas. DSN of monitored people may be used to provide context to an analysis of observed activities. DSN may encode temporal frequencies for inferring the intent of activities carried on by a person (given past observations). Recognition of activities that span large geographical areas may be noted. DSN may be used for aggregating events that occurred at different locations, and for extracting social groups based on similar activities/events from disparate locations.

The system may provide for data indexing and event forensics. Some of the items may include association from incomplete observations, online indexing of visual data, indexing social networks, fast querying of observations, driving forensic analyses using the DSN topology and characteristics, and automatic populating DSN with people of interest.

Network analyses may cover for various gaps of information. There may be analyses of gaps in observations which include analyses from incomplete/uncertain observations. There may be multi-valued edges (e.g., similarities, locales, relationships, events, and so on). The analyses may consider belief propagation or probabilistic analysis in multi-modal networks and incomplete video analytics. Incomplete video analytics may rely on inferences made from incomplete measurements, identifying the network of interest from parts of it that were observed, defining indicators that can characterize the shape and nature of networks, and knowing what is not known such as identifying gaps in observations versus observed data. Network syntheses and analyses may be augmented with machine vision and learning and machine vision approaches. The approaches may include learning network structures for fast detection and recognition, learning methodology for analytics of large networks, and making inferences from partial observations. Metrics may be defined for assessing network analysis tools.

The system may deal with and overcome gaps in network mapping/data collection. It may shift from manual data collection to automatic association and mapping. There may be mapping networks/data collection from video analytics, which include robust extraction of objects, events, locales and context, and associations and relationships from spatio-temporal properties with large temporal and spatial scales. One example may include mapping a network corresponding to an unmanned aerial vehicle (UAV) monitoring and ground-based observations such as of objects, locales and events association. Another example may include mapping a network over a large geographic area and temporal scale, including event recognition over large period of time (e.g., days, weeks, months, years).

Dealing with the gaps may also include creating an open DSN from short term observations and associating and/or aggregating social sub-networks from long-term observations (e.g., gaps in observations). There may further be an open dynamic social network model having a hierarchical representation. There may be an unknown *a priori* population of interest which may be overcome with analyses of large scale networks. Integration of objects, locales, context and events may help remove gaps in network mapping and data collection. Metrics may be defined for assessing associated network mapping tools.

The system may accommodate gaps relative to its forensic tools. It may visualize relationships between actors, events and locales for uncovering underlying structures difficult to grasp from disparate data, which could include an integration of network visualization with video analytics and video as evidence to support facts, such as augmenting social network analysis tools adopted by the intelligence community.

Relative to online forensics, the system may shift from forensic analysis to pre-emptive/predictive analysis, which may include real-time backtracking of people of interest. Online forensics may augment network visualization with querying capabilities, and search for similar networks or spatio-temporal relationships.

The system may resort to cross-domain integration relative to forensics, which may include open source, broadcast news, and other video resources. Also, there may be multi-sensor intelligence resources where the data are different but the content is similar or relevant. There may be a data framework provided for collaboration across communities.

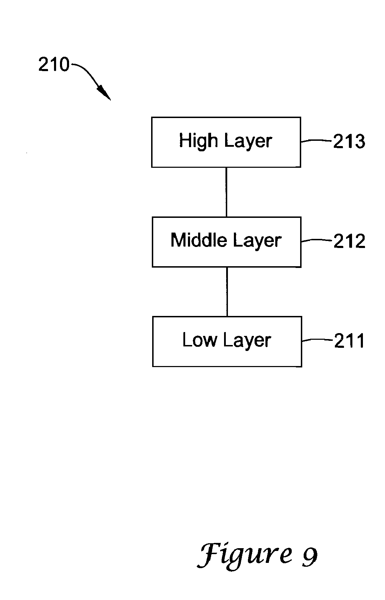

The system for constructing or synthesizing social networks from image data may be described in the context of a layered architecture. In Figure 9, a system 210 having a layered architecture may be used for constructing the dynamic social network. The architecture may be structured with three or so layers. However, depending on the design, the architecture may have more or less than three layers. The present illustrative example may have three layers. First, a low layer 211 may include obtaining raw image data from the various sensors around a facility or the like under observation. This layer may include attaining video analytics results of actor-event involvement as drawn from the data. Such involvement may be put into a form of a raw matrix which may include such items as actor IDs, event IDs, one or more camera numbers, timestamps, location, associations between actors, and so forth. An actor may be a person or an object. A middle layer 212 may follow layer 211 and a high layer 213 may follow layer 212.

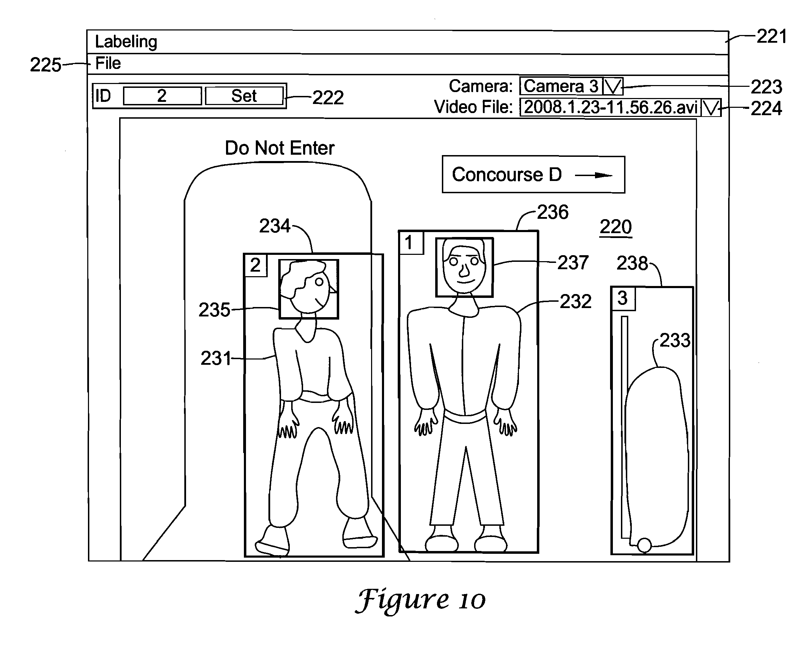

Figure 10 is an example of an image 220 on a screen 221, such as that of a computer relative to the present system. Screen 221 may be a manual labeling and editing screen. A selection 225, entitled "File", may be made in order to load information about video files. Item 223 indicates a selected "Camera 3". Item 224 indicates the video file selected such as 2008.1.23-11.56.26.avi which gives date, time and avi. Item 222 provides for a setting of an ID "2" of a selected object in image 220. Image 220 shows three actors, persons 231 and 232, and luggage 233, in an airport environment. Actor 231 may have a body rectangle 234 and a face rectangle 235. Actor 232 may have a body rectangle 236 and a face rectangle 237. Actor 233 may have an object rectangle 238. Actors 231, 232 and 233 may have object IDs "2", "1" and "3" in the upper left corner of the body and object rectangles 234, 236 and 238, respectively. Rectangle 234 may be selected of an object ID setting as indicated at item 222. The other rectangles 236 and 238 may have object IDs assigned to them in a similar manner. Portions of image 220 may be extracted for analysis and storage. Those portions may include body rectangles 234 and 236, object rectangle 238, and face rectangles 235 and 237.

Video analytics information may show a cameras setting file for camera 1, camera 2, and so on. The setting file may provide frame rate, path to video files, names of video files, and other pertinent information that may be useful. Video analytics information for video description may provide time stamp dates, object ID for body and face rectangles, dimensions of the rectangles, and a number of time stamps which correspond to the number of frames.

Second, a middle layer 212 may include an actor-event multi-dimensional matrix. It may be a multi-mode sociomatrix, where rows index actors and columns index events. For instance, if there are n actors and m events, then the matrix may be an "n x m" matrix. An (i, j) cell of the matrix may be 1 if row actor i is involved with event j. Otherwise, the entry may be 0 if row actor i is not involved with event j. The row margin totals may indicate the number of events with which each actor is involved.

The matrix may a multi-dimensional matrix containing people, object and event information from a video analytics processor. The may be weighted relationship indices determined from information from the video analytics processor and put into the matrix for forming a basis of the social network.

Third, a high layer 213 may include a social network of actors and relationships. Actors and nodes may be regarded as equivalent terms. Relationships, edges and links may be regarded as equivalent terms. The term "some" may mean at least one. A relationship may result from, be indicated by, inferred from, or described by an event among the actors. For each relationship, link or edge, a weight may be assigned. The greater the weight, the tighter is the relationship. The weight may have correspondence to an importance factor of a respective event.

The low, middle and high layers may be regarded as first, second and third layers, respectively, or vice versa. The three, more or less, layers may be labeled with other terms as may appear fitting.

Events may often involve two or more actors. Relative to the architecture of the present system, a relationship of the two or more actors indicated at the high layer may be inferred from the actor-event matrix of the middle layer. The events may build a linkage among the actors. The events may be co-location, co-temporal, and/or other.

In proceeding from the middle layer 212 to the high layer 213, an importance factor may be determined for each event. A weighted frequency may be calculated for the relationship between two actors in the high layer. A basic frequency may be proportional to the number of times that two actors have a one (1) in the same columns of a table or matrix. The weighted frequency may be the basic frequency multiplied by an importance factor or weight of a relevant event. Attendance at some of the events may have a magnitude of importance which may be referred to as a "weight".

In other words, the basic frequency may be a number of times that actors have been present at one or more of the same events. The weighted frequency of the relationship between the actors may be a product of the basic frequency and the weight assigned to the respective same event. The total of the weights assigned to all of the events of an actor-event matrix should be about one (1).

In sum, a dynamic social network may eventually be built from raw images or video with an approach that proceeds through the low layer 211, the middle layer 212 and the high layer 213, respectively, in the present system 210. With a sliding window in time, to reach back for information that has passed, the social network may be dynamic. Also, in that information is incomplete or updatable at a certain point in time, with the present system 210 in an on-line situation, data may continuously flow to the low layer for processing which may complete and/or update information already in the system, or bring in new information thus also resulting in the social network being dynamic.

Video or surveillance data may be extracted from the raw images or video at the low layer 211. The low layer may also handle image or video data for purposes of extracting and determining actors and events. A network of cameras may be used for collecting the data. For the same camera, or several cameras with overlapping fields of view, one may perform motion tracking of an association of an actor or actors. For different cameras, particularly with non-overlapping fields of view, there may be an identification (ID) association of an actor or actors between multiple cameras. The ID association may include face association, actor association, and/or biometrics association, such as standoff iris recognition. An association could instead be identification. Algorithms may be used for detecting and matching actors, faces, other biometrics, and more, especially with respect to identifying actors from one camera to another camera, actors at events, and actors associating and/or meeting with each or one another. Also, algorithms may be used to identify and/or associate events. The algorithms may be part of the video analytics at the low layer 211.

There may be detection, tracking, recognition, association and other sub-modules that provide information which can be put in a repository for data. Operations by the video analytics on the information from the sub-modules may be effected with appropriate algorithms.

The events under consideration may be co-spatial events and/or co-temporal events. For example, a co-spatial event may involve an object, such as luggage, abandoned by one actor and picked up by another actor. The luggage and persons may be regarded as actors, i.e., object and persons. The abandonment and picking up of the luggage may be regarded as one or two events to be analyzed. The event may be attended by both actors but not necessarily at the same time and thus be regarded as co-spatial. If both actors are aware of each other's actions, they may be considered as attending one and the same event. If that is not the case, for example, the first actor leaves or abandons luggage in an airport, intentionally or unintentionally, and the second actor, such as security guard, picks up the luggage for safety reasons and has little or no knowledge about the first actor, and that the picking up is not a planned or coordinated act relative to the first actor, then both actions regarded as two events. The luggage itself may be regarded as an actor. If both actors were playing a role relative the abandoning and pick-up of the luggage, then these actions may be considered as attending one event. This event appears to be of interest, especially in an airport setting, and may have a particular significant importance. In another setting, the event may be considered as having insignificant importance.

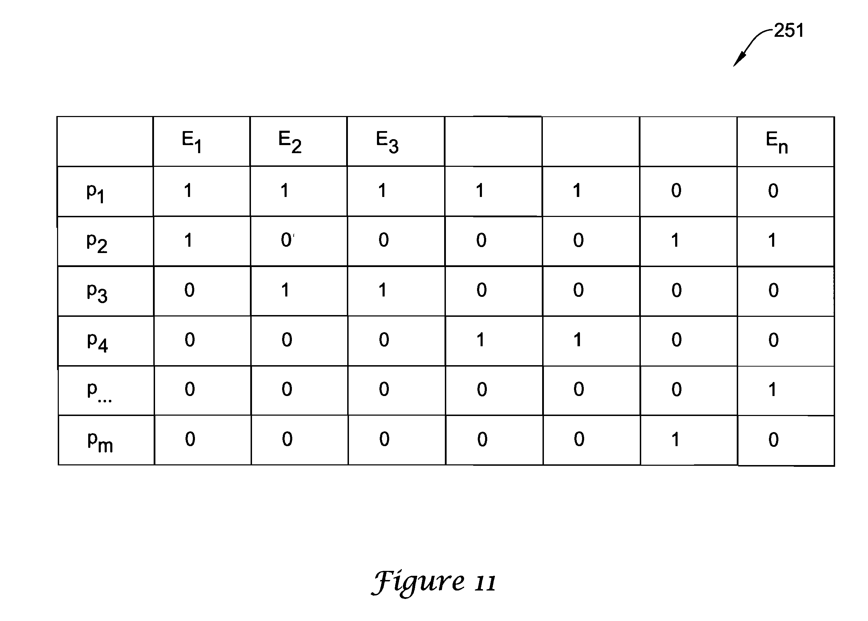

The video analytics of the low layer analysis may extract the events, determine who the actors are, and check features and match features of the actors. Numerous actors may be noted. There may be a meeting, i.e., an event, between two actors indicating a spatial-temporal co-location, that is, two actors being simultaneously at the same location for the event. However, in some situations, an event may be just co-spatial or co-temporal. The actors and events may be extracted from the video data at the low layer. Such data may be reduced to an actor-event matrix at the middle layer 212. Attending an event, such as a meeting, may be regarded as a logic function "AND" in the grid, table or matrix. For example, two actors relative to an event may be indicated by a one or zero unit in the respective box of the matrix 251 as may be noted in Figure 11.

Matrix 251 of Figure 11, which may be at middle layer level 212 of architecture 210 in Figure 9, lists actors $p_1$-$p_m$ and events $E_1$-$E_n$. It may be noted that $p_1$ attended five events, two of them attended by the actor $p_3$ and two of them by actor $p_4$. The other event was attended once by actor $p_2$. With many entries in such a table or matrix, a pattern of attendance by the actors of events may emerge revealing information of a social network.

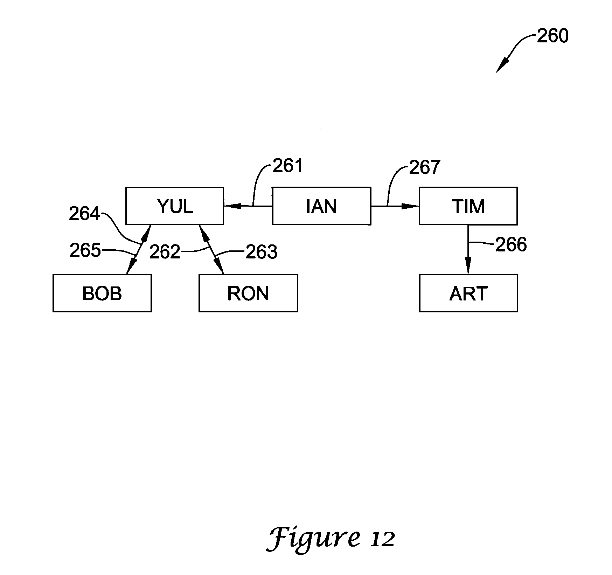

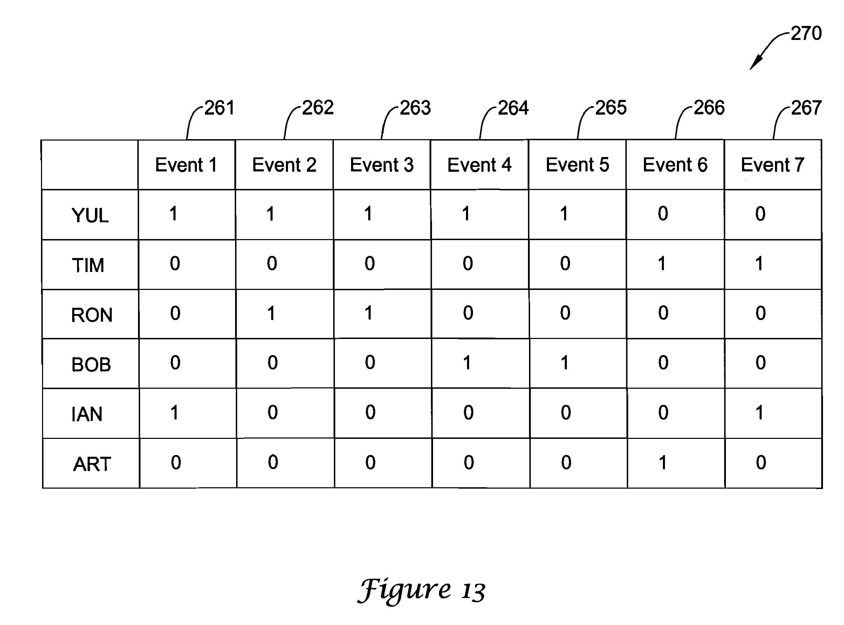

Figures 12 and 13 show a more concrete example of an interaction of actors. Figure 12 is a diagram 260 of various interactions among actors named Yul, Ian, Tim, Bob, Ron and Art involving events labeled 261-267. The information of the diagram 260 in Figure 12 may be placed in a matrix 270 in Figure 13. The names of the actors are shown as rows and the events shown as columns. Each arrow may indicate that a meeting is at the office of the actor to which the arrow points. For instance, a meeting of Ian with Yul may be regarded as an event 261 at Yul's office and entered in matrix 270 as a "1" in cells that are intersections of Yul and Ian with event 261. The two meetings between Yul and Ron may be regarded as events 262 and 263. A "1" may be entered in a cell at the intersections of Yul and Ron under the columns of events 262 and 263 of matrix 270 in Figure 13. Similarly, two meetings between Yul and Bob may be regarded as events 264 and 265. A "1" may be entered in a cell at the intersections of Yul and Bob under the columns of events 264 and 265. A meeting of Tim with Art may be regarded as an event 266. A "1" may be entered in cells at the intersection of their names under the column of event 266 in matrix 270. A meeting of Ian with Tim may be regarded as event 267. A "1" may be entered in cells at the intersection of their names and event 267. These meetings, as indicated by "ones" may be links, relationships or edges between the actors or nodes.

There may be a spatial-temporal frequency. For instance, actors meeting five times within one week may establish a link. The link may be regarded as weak, moderate or strong. One meeting time between actors may be regarded and a weak or no link. The link may be from an event. Each event may have a weight. The weights of events may vary. An important event may have a significant weight. The abandoning of a piece of luggage at an airport may be an important event having a significant weight. If an event has no importance, it may have a weight of zero, and there may be no result of connection, relationship, edge or link between or among the actors of concern.

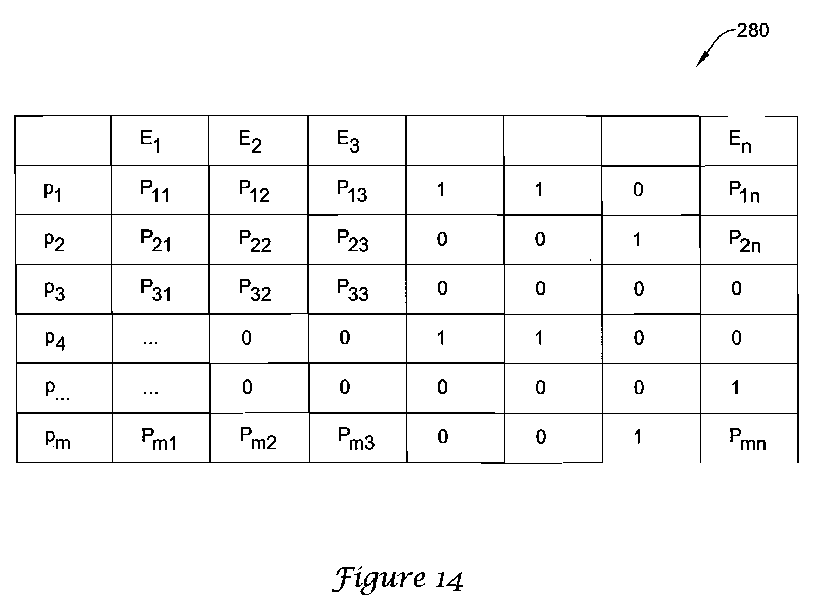

Figure 14 shows a table or matrix 280 where a transition may be made from the middle layer 212 to the high layer 213 of architecture or system 210. The links or intersections of actors and events in matrix 270 of Figure 13 may be noted with a "1" or "0" for attendance or non-attendance at layer 212. However, matrix 280 is another step towards information to provide a basis for constructing the social network. Events may have importance factors. Consequently, weights may be assigned to links. There may be a threshold value (T) of a weight for a link to be recognized. The value may be designated to be equal to or greater than some selected number. Weights of links may be used to derive a social network. The weights of the links between or among actors may provide the basis for the social network of the actors at the high layer 213 of the system 210 architecture.

Matrix 280 may be an extended one, as shown in Figure 14. The actors as indicated in the far left column and the events are listed in the far top row. These labels technically are not part of the actual matrix. In some of the cells, which are intersections of the actor rows and the event columns, not only are there some clear values of links of attendance and non-attendance, such as zeros and ones, respectively, but there are weights assigned to the links. There may be perturbations, an index, labels, and so on. Link weights for several actors may be derived from the event weights (as shown herein) which in turn can be derived from importance factors of the events. The designation of a link weight (arguably analogous to a probability of significance or importance in certain contexts) in matrix 280 relative to an actor may be indicated by a P with the subscripts indicating the actor and the event, respectively. $P_1$, $P_2$ ... $P_n$ may represent the actors. $E_1$, $E_2$ ... $E_m$ may represent the events. For the first listed actor, $p_1$, the weight relative to the third listed event, $E_3$, may be $P_{13}$. For the third listed actor, $p_3$, the weight relative to second listed event, $E_2$, may be $P_{32}$. There may be a total of m actors and a total of n events. One may have $P_{11}$,... $P_{1n}$, $P_{11}$, ... $P_{m1}$, ... $P_{mn}$, filling in the cells of matrix 280 relative to the weights for the actors and events.

The events may be extracted from raw data, where $w_1$ may be a weight value assigned for one event, and other weights assigned for other events.

$$"W = \sum_{i=1}^{N} w_i".$$ A maximum value of W may be 1.

There may be one weight per event, and the weights of all of the events may add up to one. Link weights may be calculated for actors relative to the events as illustrated herein.

"i" and "j" may be actors.

$$L(P_i,P_j) = w_1(P_{i1}*P_{j1}) +...+ w_N(P_{iN}*P_{jN})$$

$$W = \sum_{i=1}^{N} w_i = 1$$

$$L(P_i,P_j) = \sum_{k=1}^{N} w_k \, (P_{ik}*P_{jk})$$

$$L(P_i,P_j) > T$$

For implementation of the multi-layer architecture of the present system, a sliding window may be part of a dynamic social network at the high layer 213 of the present system 210 as it adds a dynamic feature to the network. A sliding window of frames or minutes may be regarded as a temporal window. There may be, for example, a twenty minute sliding window. Minutes may be regarded as more consistent measurement than frames. For instance, there may be a fast frame rate and a slow frame rate. There may be a same amount of time for different numbers of frames. The window may be slid back to examine earlier moments of an actor or event which after a period of observation became of interest.

In the present specification, some of the matter may be of a hypothetical or prophetic nature although stated in another manner or tense.

Although the invention has been described with respect to at least one illustrative example, many variations and modifications will become apparent to those skilled in the art upon reading the present specification. It is therefore the intention that the appended claims be interpreted as broadly as possible in view of the prior art to include all such variations and modifications.

**Claims**

1. A system for synthesizing a social network from image data, comprising:

   one or more image sensors (31, 41);
   a video analytics module (32) connected to the one or more image sensors (31, 41); and
   a social network synthesis module (33, 49, 59) connected to the analytics module (32); and wherein:

   the analytics module (32) comprises:

   a detection sub-module (84) connected to the one or more sensors (31, 41);
   a tracking sub-module (71) connected to the detection sub-module (84); and
   an activity recognition sub-module (91) connected to the detection and tracking sub-modules (84, 71);

   the detection sub-module (84) is for detecting people, faces, objects, and the like;
   the tracking sub-module (71) is for tracking people, faces, objects, and the like; and
   the activity recognition sub-module (91) is for detecting one or more events.

2. The system of claim 1, wherein:

   the analytics module (32) further comprises an association sub-module (51, 88) connected to the detection, tracking and activity recognition sub-modules (84, 71, 91); and
   the association sub-module (51, 88) is for spatial and/or temporal associating people and/or objects among past events.

3. The system of claim 1, wherein:

   the social network synthesis module (33) is for constructing (62) a social network originating from an event, person and/or object; and
   the constructing (62) the social network is automatic.

**4.** The system of claim 3, wherein:

> an actor (21) is a person or object; and
> constructing (62) a social network comprises:
>
> > indicating the actors (21) involved with the events (22); and
> > inferring relationships between the actors involved with the events.

**5.** The system of claim 4, wherein:

> the actors (21) and events (22) are placed in a multi-dimensional matrix (251, 270, 280);
> a first dimension indexes the actors (21);
> a second dimension indexes the events (22); and
> a common intersection cell of an actor and an event in the matrix (251, 270, 280) has an entry of a one or zero, indicating involvement or non-involvement of the actor (21) with the event (22), respectively.

**6.** The system of claim 1, further comprising:

> a social network analysis module (33, 49, 59) connected to the social network synthesis module (33, 49, 59); and
> wherein:
>
> > the social network synthesis module is for constructing (62) a social network originating from an event, person and/or object;
> > the analysis module is for analyzing aspects of the social network; and
> > the analysis module is at least partially for providing results of an analysis to the synthesis module for constructing (62) an improved social network.

**7.** A method for constructing a social network, comprising:

> capturing images (42, 43, 44, 45) of in area of interest;
> processing the images to obtain information for a social network; and
> constructing (62) a social network from the information.

**8.** The method of claim 7, wherein:

> the processing the images comprise:
>
> > recognizing a triggering event (54, 65, 101);
> > detecting people (21, 54, 55, 57, 102), objects (21, 101) and events (22, 47) associated with the triggering event (54, 65, 101);

> > tracking the people and objects; and
> > associating the people and objects with each other; and
>
> the information used for constructing (62) the social network related to the triggering event (54, 65, 101) is derived from the detecting people (21, 54, 55, 57, 102), objects (21, 101) and events (22, 47) associated with the triggering event (54, 65, 101); the tracking the people and objects; and the associating the people and objects with each other.

**9.** A method for constructing a dynamic social network, comprising:

> obtaining (31, 32) image data about an entity (54, 55, 66, 67) of interest;
> applying video analytics (32) to the image data to discover relationships of the entity with other entities, and other information pertinent to the entity of interest; and
> constructing (62) a dynamic social network from the relationships and the other information; and
> wherein the entity is a person, object and/or an event.

**10.** The method of claim 9, further comprising providing forensic analysis (95) of the entity of interest (54, 55, 66, 67) of the relationships of the entity with other entities, and of other entities, and of the other information to further develop (62, 96) the dynamic social network and/or construct (62, 96) one or more other dynamic social networks.

*Figure 1*

Figure 2

10

| Open Dynamic Social Network Analysis | —34 |

| Open Dynamic Social Network Systhesis | —33 |

| Video Analytics, Biometrics, Activity Recognition | —32 |

| Network of Cameras | —31 |

*Figure 3*

EP 2 151 787 A2

Figure 4

Figure 5

Figure 6

Figure 7

EP 2 151 787 A2

Figure 8

210

High Layer —213

Middle Layer —212

Low Layer —211

*Figure 9*

EP 2 151 787 A2

*Figure 10*

|     | $E_1$ | $E_2$ | $E_3$ |   |   |   | $E_n$ |
| --- | --- | --- | --- | --- | --- | --- | --- |
| $p_1$ | 1 | 1 | 1 | 1 | 1 | 0 | 0 |
| $p_2$ | 1 | 0 | 0 | 0 | 0 | 1 | 1 |
| $p_3$ | 0 | 1 | 1 | 0 | 0 | 0 | 0 |
| $p_4$ | 0 | 0 | 0 | 1 | 1 | 0 | 0 |
| $p_{...}$ | 0 | 0 | 0 | 0 | 0 | 0 | 1 |
| $p_m$ | 0 | 0 | 0 | 0 | 0 | 1 | 0 |

251

*Figure 11*

EP 2 151 787 A2

*Figure 12*

EP 2 151 787 A2

|       | Event 1 | Event 2 | Event 3 | Event 4 | Event 5 | Event 6 | Event 7 |
|-------|---------|---------|---------|---------|---------|---------|---------|
| YUL   | 1       | 1       | 1       | 1       | 1       | 0       | 0       |
| TIM   | 0       | 0       | 0       | 0       | 0       | 1       | 1       |
| RON   | 0       | 1       | 1       | 0       | 0       | 0       | 0       |
| BOB   | 0       | 0       | 0       | 1       | 1       | 0       | 0       |
| IAN   | 1       | 0       | 0       | 0       | 0       | 0       | 1       |
| ART   | 0       | 0       | 0       | 0       | 0       | 1       | 0       |

*Figure 13*

EP 2 151 787 A2

|  | $E_1$ | $E_2$ | $E_3$ |  |  |  | $E_n$ |
|---|---|---|---|---|---|---|---|
| $p_1$ | $P_{11}$ | $P_{12}$ | $P_{13}$ | 1 | 1 | 0 | $P_{1n}$ |
| $p_2$ | $P_{21}$ | $P_{22}$ | $P_{23}$ | 0 | 0 | 1 | $P_{2n}$ |
| $p_3$ | $P_{31}$ | $P_{32}$ | $P_{33}$ | 0 | 0 | 0 | 0 |
| $p_4$ | ... | 0 | 0 | 1 | 1 | 0 | 0 |
| $p_{...}$ | ... | 0 | 0 | 0 | 0 | 0 | 1 |
| $p_m$ | $P_{m1}$ | $P_{m2}$ | $P_{m3}$ | 0 | 0 | 1 | $P_{mn}$ |

*Figure 14*

**REFERENCES CITED IN THE DESCRIPTION**

**Patent documents cited in the description**

- US 12429308 A